# EUROPÄISCHE PATENTSCHRIFT

(11) **EP 3 359 993 B1**
(45) Veröffentlichungstag und Bekanntmachung des Hinweises auf die Patenterteilung: **23.11.2022**
(21) Anmeldenummer: 16788633.2
(22) Anmeldetag: 07.10.2016
(51) Int. Cl.: G02B 6/26, B29C 67/00, G03F 7/20

(54) **VERFAHREN ZUR HERSTELLUNG VON MIKROSTRUKTUREN AUF OPTISCHEN FASERN**
METHOD FOR PRODUCING MICROSTRUCTURES ON OPTICAL FIBRES
PROCÉDÉ DE FABRICATION DE MICROSTRUCTURES SUR DES FIBRES OPTIQUES

(30) Priorität: 07.10.2015 DE 102015012980
(43) Veröffentlichungstag der Anmeldung: 15.08.2018
(73) Patentinhaber: Baden-Württemberg Stiftung gGmbH, 70174 Stuttgart (DE); Nanoscribe GmbH, 76344 Eggenstein-Leopoldshafen (DE)
(72) Erfinder: GIEßEN, Harald, 67297 Marnheim (DE); GISSIBL, Timo, 71229 Leonberg (DE); THIEL, Michael, 76137 Karlsruhe (DE)
(74) Vertreter: DREISS Patentanwälte PartG mbB
(86) Internationale Anmeldenummer: PCT/EP2016/001686
(87) Internationale Veröffentlichungsnummer: WO 2017/059960

(56) Entgegenhaltungen:
- EP-A1- 2 492 085
- US-A- 5 858 475
- MELISSINAKI VASILEIA ET AL: "Fiber endface Fabry-Perot vapor microsensors fabricated by multiphoton polymerization technique", ADVANCED FABRICATION TECHNOLOGIES FOR MICRO/NANO OPTICS AND PHOTONICS VIII, PROCEEDINGS OF SPIE, Bd. 9374, 13. März 2015 (2015-03-13), Seiten 93740D-1-93740D-8, XP060050392, DOI: 10.1117/12.2079439 ISBN: 978-1-62841-730-2
- M. KOWALCZYK ET AL: "Optical microstructures fabricated with direct laser writing technique", LATVIAN JOURNAL OF PHYSICS AND TECHNICAL SCIENCES, Bd. 51, Nr. 5, 15. Dezember 2014 (2014-12-15), Seiten 4-13, XP055337456, DOI: 10.2478/lpts-2014-0026
- COJOC G ET AL: "Optical micro-structures fabricated on top of optical fibers by means of two-photon photopolymerization", MICROELECTRONIC ENGINEERING, Bd. 87, Nr. 5-8, 16. Dezember 2009 (2009-12-16), Seiten 876-879, XP026945328, ISSN: 0167-9317, DOI: 10.1016/J.MEE.2009.12.046
- HENRY E WILLIAMS ET AL: "Fabrication of three-dimensional micro-photonic structures on the tip of optical fibers using SU-8", OPTICS EXPRESS, Bd. 19, Nr. 23, 27. Oktober 2011 (2011-10-27), Seiten 22910-22922, XP055337463, DOI: 10.1364/OE.19.022910

## Beschreibung

Die Erfindung betrifft ein Verfahren zur Herstellung von Mikrostrukturen, insbesondere von mikrooptischen Bauelementen, auf optischen Fasern bzw. Glasfasern.

Lichtwellenleiter bzw. Glasfaserkabel werden in verschiedenen Bereichen vielfältig eingesetzt. Als Beispiele für die Verwendung von Glasfaserkabel können die Nachrichtentechnik, die Materialbearbeitung, die Medizin, die Messtechnik und die Geräte- oder Gebäudebeleuchtung angeführt werden. So können z.B. Glasfaserkabel im Bereich der Medizin für Beleuchtungs- und Abbildungszwecke unter anderem in Mikroskopbeleuchtungen, Lichtleitkabeln und Bildleitern in Endoskopen verwendet werden.

Je nach Anwendungsbereich ist es erforderlich, die Glasfaser bzw. Glasfaserkabel mit weiteren optischen Elementen zu kombinieren. Beispielsweise kann eine Linse auf eine Glasfaser gesetzt werden, um Licht durch die Glasfaser und dann durch die Linse zu schicken. Dabei ist es z.B. möglich, die Wellenfront und/oder die Intensitätsverteilung zu modifizieren und/oder die Polarisation zu beeinflussen. Für viele Anwendungen, beispielsweise für die Endoskopie, ist auch eine Miniaturisierung von entscheidender Bedeutung, so dass es erforderlich ist, Mikrostrukturen bzw. mikrooptische Bauelemente in Verbindung mit Glasfasern bereitzustellen.

Durch Präzisionsmikrospritzgussverfahren in Kombination mit Ultrapräzisionsbearbeitung oder durch reine Ultrapräzisionsbearbeitung können mikrooptische Bauteile mit Größen unter 1-3 mm zwar hergestellt werden. Jedoch sind diese Bauteile nicht für den Einsatz auf Glasfasern vorgesehen.

Mikrospritzgussverfahren sind bei der Herstellung von optischen Mikrobauteilen stark eingeschränkt. Unter anderem sind spezielle Werkzeuge nötig, um nur ein geringes Volumen zunächst homogen aufzuschmelzen und anschließend dem Spritzwerkzeug zuzuführen. Außerdem muss das Optikdesign schon den Werkzeugen angepasst werden, so dass die Bauteile anschließend wieder beschädigungsfrei der Spritzgießmaschine entnommen werden können. Eine anschließende Nachbearbeitung, wie unter anderem die Angussabtrennung durch Fräsen oder Schleifen muss ebenfalls zerstörungsfrei und ohne Verschmutzung geschehen. Ferner ist die Herstellung der für das Spritzgussverfahren nötigen Negativform aufgrund der geringen Objektdimensionen mittels Erodieren, Fräsen oder Schleifen durch die üblichen Werkzeuggrößen limitiert. Dieses Problem tritt ebenfalls bei der Herstellung von mikrooptischen Bauteilen durch Ultrapräzisionsbearbeitung auf. Aufgrund der geringen Objektabmessungen ist weiterhin die Handhabung bei der Ablage in Aufnahmen oder Magazinen erschwert. Hier spielen unter anderem auch noch das geringe Gewicht und elektrostatische Effekte eine negative Rolle.

Ein weiteres Problem stellt das Zusammenfügen eines mit einem herkömmlichen Verfahren hergestellten mikrooptischen Bauelements mit der optischen Faser dar. Da auf Grund der kleinen Abmessungen der Faser und der mikrooptischen Bauelemente ein möglichst genaues Zusammenfügen bzw. eine möglichst genaue Ausrichtung der zusammenzufügenden Teile erforderlich ist, sind hierzu herkömmlicherweise zusätzliche und aufwendige Justageschritte notwendig.

Die folgenden Veröffentlichungen beschreiben ein Verfahren zum Herstellen einer Mikrostruktur auf einem axialen Ende einer optischen Faser mittels eines direkten Laser-Schreibprozesses:
- V. Melissinaki et al.: "Fiber endface Fabry-Perot vapor microsensors fabricated by polymerization technique", PROCEEDINGS OF SPIE, Bd. 9374, 13. März 2015, Seiten 93740D-1 - 93740D-8;
- M. Kowalczyk et al.: "Optical microstructures fabricated with direct laser writing technique", LATVIAN JOURNAL OF PHYSICS AND TECHNICAL SCIENCES, Bd. 51, Nr. 5, 15. Dezember 2014, Seiten 4-13;
- G. Cojoc et al.: "Optical micro-structures fabricated on top of optical fiber by means of two-photon photopolymerization", MICROELECTRONIC ENGINEERING, Bd. 87, Nr. 5-8, 1. Mai 2010, Seiten 876-879; und
- H. E. Williams et al.: "Fabrication of three-dimensional micro-photonic structures on the tip of optical fibers using SU-8", OPTICS EXPRESS, Bd. 19, Nr. 23, 27. Oktober 2011, Seiten 22910-22922.

EP 2 492 085 A1 offenbart ein Verfahren und eine Vorrichtung zum ortsaufgelösten Einbringen eines Intensitätsmusters aus elektromagnetischer Strahlung in eine photosensitive Substanz.

US 5 858 475 A offenbart ein Verfahren zum Belacken eines Substrats, bei dem die Belackungsscheibe ("chuck"), auf welcher das zu belackende Substrat angeordnet ist, mit einem Ultraschallgerät gekoppelt wird, um Vibrationen im Lack zu induzieren.

Es ist daher eine Aufgabe der vorliegenden Erfindung, ein Verfahren zur verbesserten, d.h. einfachen, reproduzierbaren und präzisen Herstellung von Mikrostrukturen, insbesondere von mikrooptischen Bauelementen, auf optischen Fasern bzw. Glasfasern bereitzustellen.

Diese Aufgabe wird durch den Gegenstand des unabhängigen Anspruchs gelöst. Vorteilhafte Ausführungsformen sind Gegenstand der Unteransprüche.

Die erfindungsgemäße Lösung der Aufgabe betrifft ein Verfahren zur Herstellung zumindest einer Mikrostruktur auf einem axialen Ende einer optischen Faser bzw. Glasfaser, umfassend die Schritte:
- Bereitstellen der optischen Faser;
- Benetzen des axialen Endes der optischen Faser mit Fotolack;
- Gegenseitiges, insbesondere submikrometergenaues, Ausrichten der optischen Faser bzw. des axialen Endes bzw. eines Faserkerns der optischen Faser und eines Schreibstrahls eines 3D-Druckers; und
- Ausbilden der zumindest einen Mikrostruktur durch Belichten des Fotolacks mit Hilfe des 3D-Druckers;
wobei das Benetzen des axialen Endes der optischen Faser mit Fotolack ein Belacken eines Objektivs des 3D-Druckers mit Fotolack und ein Eintauchen des axialen Endes der optischen Faser in den auf das Objektiv aufgebrachten Fotolack umfasst.

Eine Mikrostruktur umfasst insbesondere eine mikrooptische Struktur und/oder ein mikrooptisches Bauelement wie z.B. eine Mikrolinse. Die Mikrostruktur weist vorzugsweise Abmessungen im Bereich von 2 µm bis 1 mm auf.

Wird in dieser Beschreibung der Begriff "Faser" verwendet, so ist stets eine optische Faser bzw. eine Glasfaser gemeint.

Unter einer "optischen Faser" wird im Sinne dieser Beschreibung insbesondere ein Lichtwellenleiter bzw. ein dielektrischer Wellenleiter oder ein Lichtleitkabel verstanden, welcher/welches zur Übertragung von Licht geeignet ist. Dabei wird das Licht in der optischen Faser, welche z.B. aus Quarzglas oder Kunststoff (polymere optische Faser) gebildet ist, geführt.

Solche optischen Fasern oder Lichtwellenleiter werden auch oft als Glasfaserkabel bezeichnet, wobei in diesen typischerweise mehrere Faser bzw. Lichtwellenleiter gebündelt werden, die zudem zum Schutz und zur Stabilisierung der einzelnen Fasern noch mechanisch verstärkt sind.

Eine optische Faser bzw. ein Lichtwellenleiter ist aus konzentrischen Schichten aufgebaut. Im Zentrum einer optischen Faser befindet sich ein lichtführender Kern, der umgeben ist von einem Mantel. Im Falle von indexgeführten Fasern ist der Brechungsindex des Mantels kleiner als der Brechungsindex des Kerns. Eine optische Faser kann z.B. einen Durchmesser von 100 µm bis 1 mm aufweisen.

Der Begriff "optische Faser" im Sinne dieser Beschreibung beschränkt sich jedoch nicht nur auf konventionelle indexgeführte Fasern, sondern umfasst auch jegliche andere Art von optischen Fasern, wie z.B. "hollow-core photonic bandgap Fasern", welche das Licht über den Effekt der photonischen Bandlücke leiten. Die periodische Struktur der Lufträume im Mantel einer solchen Faser erzeugt eine photonische Bandlücke, so dass sich Licht mit Frequenzen innerhalb der Bandlücke nicht durch den Mantel, dafür aber im Faserkern fortpflanzen kann. Im Gegensatz zu indexgeführten Fasern gibt es bei den hollow-core photonic bandgap Fasern keine Bedingung, dass der Brechungsindex des Kernbereichs größer als der des Mantels sein muss. Eine hollow-core photonic bandgap Faser kann eine spezielle Ausführungsform einer Hohlkernfaser sein, deren Kern vorzugsweise mit Luft gefüllt ist. Der Kern einer solchen Faser weist insbesondere keine Füllung mit einem speziellen, von Luft verschiedenen Medium auf.

Der Kern und/oder Mantel einer optischen Faser kann von weiteren Schutzschichten, insbesondere aus Kunststoff, umgeben sein. Abhängig von der jeweiligen Anwendung kann der Kern einen Durchmesser von einigen Mikrometern bis zu einigen hundert Mikrometern aufweisen. Weist die optische Faser einen harten bzw. festen Kern auf, so handelt es sich um eine optische Hartkernfaser bzw. Festkernfaser. Weist der Kern der optischen Faser dagegen einen Hohlraum auf, so handelt es sich um eine optische Hohlkernfaser bzw. Kapillarfaser. Der Kern bzw. der Hohlraum einer optischen Hohlkernfaser kann mit einem Gas oder einer Flüssigkeit befüllt sein oder werden. Beispielsweise können Hohlkernfaser mit Flüssigkeiten gefüllt werden, die sehr gute nichtlineare optische Eigenschaften für eine Weißlicht-/Supercontinuums-Erzeugung, für eine stimulierte Raman Streuung oder für eine mittelinfrarot Erzeugung aufweisen.

Unter einem axialen Ende einer optischen Faser ist ein axialer Endabschnitt oder axialer Endbereich der Faser zu verstehen. Eine optische Faser weist grundsätzlich zwei axiale Enden, also ein erstes und ein zweites axiales Ende, auf. Im Rahmen dieser Erfindung wird als das erste axiale Ende dasjenige axiale Ende der Faser verstanden, welches mit einer Mikrostruktur versehen werden soll und welches zu diesem Zweck mit Fotolack benetzt wird. Das erste axiale Ende der Faser ist somit das während des Schreibprozesses bzw. während dem Belichten des Fotolacks dem 3D-Drucker bzw. dem Schreibstrahl des 3D-Druckers zugewandte axiale Ende der Faser. Das zweite axiale Ende der Faser ist das dem ersten axialen Ende der Faser gegenüberliegende axiale Ende der Faser und somit das während des Schreibprozesses bzw. während dem Belichten des Fotolacks dem 3D-Drucker bzw. dem Schreibstrahl des 3D-Druckers abgewandte axiale Ende der Faser.

Das Benetzen des axialen Endes der optischen Faser mit Fotolack kann auch als Belacken bezeichnet werden.

Als Fotolack kann insbesondere ein sogenannter dip-in Lithografie-Fotolack alleine oder in Kombination mit anderen Fotolacken verwendet werden. Vorzugsweise werden lösungsmittelfreie, insbesondere ultraviolett empfindliche, Fotolacke verwendet, die die Verklebung eines Objektivs des 3D-Druckers nicht angreifen oder anlösen. Bei der Verwendung von lösungsmittelfreien Fotolacken sind keine weiteren Backvorgänge erforderlich, wie sie in der Lithografie normalerweise üblich sind. Dies ist aufgrund der kleinen Abmessungen der herzustellenden Mikrostrukturen besonders vorteilhaft, da ein kontrolliertes Ausgasen von Lösungsmittel für homogene Materialeigenschaften nur sehr schwer kontrollierbar wäre. Vorzugsweise werden transparente Fotolacke zur Herstellung von Optiken verwendet. Grundsätzlich ist es aber auch möglich, absorbierende oder reflektierende Materialien zu verwenden, vorausgesetzt dass der Fotolack für den Schreibvorgang, d.h. vor einem Polymerisieren des Fotolacks, für den Schreib- bzw. Laserstrahl im Wesentlichen transparent ist. Beispielsweise können die folgenden Fotolacke verwendet werden: Nanoscribe IP-S, Nanoscribe IP-Dip, und/oder Micro resist technology OrmoComp.

Nach dem Belacken erfolgt ein gegenseitiges, insbesondere submikrometergenaues, Ausrichten der optischen Faser bzw. des mit dem Fotolack benetzten axialen Endes der optischen Faser und des Schreibstrahls des 3D-Druckers.

Die Mikrostruktur wird mittels einer 3D-Drucktechnik, d.h. mittels eines 3D-Druckers bzw. eines 3D-Druckverfahrens, auf die optische Faser bzw. ein axiales Ende der optischen Faser aufgebracht. Der 3D-Drucker bzw. das 3D-Druckverfahren ist vorzugsweise ein 3D-Lithografiesystem bzw. 3D-Lithografieverfahren und insbesondere ein 3D-Laser-Lithografiesystem bzw. ein 3D-Laser-Lithografieverfahren. Als Beispiel für einen 3D-Drucker bzw. ein 3D-Drucksystem sei das kommerziell erhältliche 3D-Laser-Lithografiesystem "Photonic Professional GT^{™}" der Nanoscribe GmbH genannt, welches auf einer Zwei-Photonen-Polymerisation eines UV-härtenden Fotolackes basiert. Es versteht sich, dass prinzipiell auch andere 3D-Drucker oder andere 3D-Druckverfahren verwendet werden können.

Nach dem Ausrichten erfolgt ein Ausbilden der zumindest einen Mikrostruktur durch Belichten des Fotolacks mit Hilfe des 3D-Druckers. Insbesondere wird der Fotolack mit einem Schreib- bzw. Laserstrahl des 3D-Druckers belichtet. Der Fotolack ist eine fotosensitive Substanz, welche durch das Belichten, d.h. durch das Einbringen von elektromagnetischer Strahlung einer vorbestimmten Wellenlänge bzw. in einem vorbestimmten Wellenlängenbereich, seine innere Struktur verändert. Insbesondere wird der Fotolack an den belichteten Stellen gehärtet bzw. polymerisiert. Das Ausbilden bzw. Schreiben der zumindest einen Mikrostruktur erfolgt vorzugsweise auf Basis eines vorgegebenen Layouts bzw. Designs, welches z.B. mit einer Software des 3D-Druckers bereitgestellt bzw. erstellt wird.

Der Begriff "Ausbilden" der zumindest einen Mikrostruktur umfasst im Sinne dieser Beschreibung ein Aufbringen, Herstellen, Fabrizieren, Belichten und/oder Schreiben, insbesondere lithographisches Schreiben der zumindest einen Mikrostruktur. Mit anderen Worten wird die zumindest eine Mikrostruktur mit der optischen Faser bzw. einem axialen Ende der optischen Faser verbunden. Insbesondere wird die zumindest eine Mikrostruktur derart ausgebildet, dass sie mit der optischen Faser fest, d.h. unlösbar verbunden ist.

Mit dem erfindungsgemäßen Verfahren können optische Elemente vorteilhafterweise mit Auflösungen unter einem Mikrometer, welche die Beeinflussung von Licht ermöglichen, direkt auf einer optischen Faser hergestellt werden. Insbesondere können miniaturisierte Kombinationen aus verschiedenen Elementen, wie beugende, brechende oder reflektierende Elemente, hergestellt werden. Dabei ist die Formgebung der einzelnen optischen Elemente nahezu frei wählbar, d.h. es können insbesondere auch komplexere Strukturen ohne Limitierung an das Optikdesign erzeugt werden.

Beispielsweise lassen sich mit dem erfindungsgemäßen Verfahren Freiform-Mikrolinsen direkt auf Glasfaserenden herstellen, so dass Endoskope mit Abmessungen von unter 1 mm realisiert werden können. Auch können mehrlinsige refraktive, reflektive, oder diffraktive Objektive direkt auf Faserenden hergestellt werden. Ebenso sind Freiformoptiken mit nichtsymmetrischen Oberflächen möglich, um zum Beispiel direkt die Lichtverteilung auf einer gewünschten Oberfläche einzustellen.

Da direkt auf der optischen Glasfaser gefertigt wird, ist das Handhaben der Mikrobauteile sehr einfach. Da zusätzlich keine Negativform benötigt wird, können verschiedene Optikdesigns ohne zusätzlichen Aufwand hergestellt werden. Ferner sind komplexe Optikdesigns, die auch aus mehreren optischen Teilelementen bestehen, möglich.

Das erfindungsgemäße Verfahren erlaubt die Herstellung von optischen Strukturgrößen höher als 10 µm und mit einer Auflösung von ≤ 1 µm.

Da bei dem erfindungsgemäßen Verfahren optische Bauelemente direkt auf optische Fasern fabriziert werden, entfällt ein späteres Zusammenfügen der Mikrooptik mit der Faser. Dies gilt insbesondere auch dann, wenn die Mikrooptik zwar mit einem dip-in Multiphoton-Laserlithografie-Verfahren hergestellt, jedoch auf einem herkömmlichen flachen Substrat produziert wurde.

Erfindungsgemäß umfasst das Benetzen des axialen Endes der optischen Faser ein Eintauchen des axialen Endes der optischen Faser in ein Fotolackreservoir.

Im Rahmen der Erfindung hat sich herausgestellt, dass das Benetzen bzw. Belacken der optischen Faser durch ein Eintauchen des axialen Endes der optischen Faser in ein Fotolackreservoir zu homogenen und reproduzierbaren Ergebnissen führt. Eine Belackung per Spray- oder Spin-Coating, welche für eine Faser nur sehr eingeschränkt oder gar nicht möglich ist, kann somit vorteilhafterweise vermieden werden.

Bei dem Fotolackreservoir kann es sich, in einem nicht erfindungsgemäßen Beispiel, um Fotolack handeln, der in einem externen Gefäß, in das die Faser getaucht werden kann, aufbewahrt wird.

Erfindungsgemäß befindet sich der Fotolack bzw. das Fotolackreservoir, in das die Faser eingetaucht wird, jedoch direkt auf dem Objektiv des 3D-Druckers. Mit anderen Worten wird vorzugsweise der Fotolack zunächst auf das Objektiv des 3D-Druckers aufgebracht. Dieser auf das Objektiv aufgebrachte Fotolack dient dann vorteilhafterweise als Fotoreservoir zum Eintauchen bzw. Belacken des zu beschreibenden Endes der optischen Faser.

Vorzugsweise wird die optische Faser bzw. das axiale Ende der optischen Faser in dem Fotolack bzw. dem Fotolackreservoir bewegt bzw. geschwenkt. Alternativ oder zusätzlich umfasst das Benetzen des axialen Endes der optischen Faser ein Behandeln mit Ultraschall, d.h. ein Einlegen der Faser bzw. des axialen Endes der Faser in ein Ultraschallbad. Weiter vorzugsweise wird nach dem Eintauchen des axialen Endes der optischen Faser in das Fotolackreservoir und/oder in das Ultraschallbad eine vorbestimmte Zeit gewartet, bis der Fotolack das axiale Ende der Faser bzw. die Faserendfläche homogen umgibt.

Auf diese Weise können vorteilhafterweise Lufteinschlüsse und Fotolackflüsse vermieden werden.

In einer weiteren bevorzugten Ausführungsform erfolgt das gegenseitige Ausrichten der optischen Faser und des Schreibstrahls des 3D-Druckers mittels einer Leuchtdiode, insbesondere einer Laserdiode. Vorzugsweise umfasst das gegenseitige Ausrichten der optischen Faser und des Schreibstrahls des 3D-Druckers ein Einkoppeln von Licht, insbesondere mittels einer Leuchtdiode oder eines Lasers, in ein zweites axiales Ende der optischen Faser, d.h. in das axiale Ende, welches dem mit Fotolack benetzten axialen Ende gegenüberliegt bzw. welches während des Schreibvorgangs von dem 3D-Drucker bzw. dessen Schreibstrahl abgewandt ist.

Das Einkoppeln von Licht in die optische Faser erfolgt vorzugsweise derart, dass das eingekoppelte Licht einen Faserkern der optischen Faser auf dem zu bearbeitenden bzw. mit Fotolack benetzten Ende der optischen Faser, insbesondere für eine Justierkamera, sichtbar bzw. erkennbar macht.

Durch das eingekoppelte Licht kann das erste axiale Ende bzw. eine zugehörige erste bzw. zu bearbeitende Faserendfläche beleuchtet werden, so dass das Licht den Faserkern an dem ersten axialen Ende bzw. an der ersten Faserendfläche, insbesondere für eine Justierkamera, sichtbar bzw. erkennbar macht.

Alternativ oder zusätzlich umfasst das gegenseitige Ausrichten der optischen Faser und des Schreibstrahls des 3D-Druckers ein Erkennen eines Faserrandes bzw. einer Faserumrandung.

Auf diese Weise ist mit dem erfindungsgemäßen Verfahren im Vergleich zu herkömmlichen Verfahren vorteilhafterweise eine hochpräzise, d.h. submikrometergenaue, Ausrichtung möglich. Eine solche Ausrichtung könnte bei einem späteren Zusammenfügen eines konventionell hergestellten mikrooptischen Bauelements mit der optischen Faser nur sehr schwer erreicht werden. Zumindest wären bei einem herkömmlichen Verfahren zusätzliche Justageschritte notwendig, um eine vergleichbar gute Ausrichtung zu realisieren. Solche zusätzlichen Justageschritte sind bei dem erfindungsgemäßen Verfahren dagegen überflüssig.

In einer weiteren bevorzugten Ausführungsform umfasst das gegenseitige Ausrichten der optischen Faser und des Schreibstrahls des 3D-Druckers ferner ein Ermitteln der Position eines radialen Mittelpunktes der optischen Faser bzw. des Faserkerns und ein Definieren der ermittelten Position als Koordinaten-Nullpunkt eines Koordinatensystems des 3D-Druckers. Das Ermitteln der Position eines radialen Mittelpunktes der optischen Faser kann z.B. auf Basis des in das zweite axiale Ende der Faser eingekoppelten Lichts erfolgen.

Vorzugsweise wird mittels des in das zweite Ende der optischen Faser eingekoppelten Lichtstrahls eine zu dem ersten axialen Ende zugehörige Faserendfläche auf eine Justierkamera projiziert und ein Koordinaten-Nullpunkt des 3D-Druckers im Wesentlichen, insbesondere submikrometergenau, in einen Faserkernmittelpunkt gelegt. Mit anderen Worten wird vorzugsweise der Faserkernmittelpunkt der optischen Faser, insbesondere mit einer Genauigkeit im Submikrometerbereich, als Koordinaten-Nullpunkt definiert.

In einer weiteren bevorzugten Ausführungsform wird das Ausrichten der optischen Faser und des Schreibstrahls des 3D-Druckers unter Verwendung einer Justierkamera und/oder unter Verwendung eines Bilderkennungs-Algorithmus, insbesondere zumindest teilweise automatisch, durchgeführt.

Alternativ oder zusätzlich wird das Ausrichten der optischen Faser und des Schreibstrahls des 3D-Druckers unter Verwendung eines inversen modifizierten Mikroskops, welches Teil des 3D-Druckers sein kann, durchgeführt. Unter einem inversen Mikroskop wird ein Mikroskop verstanden, bei dem dessen Objektiv bzw. Objektive unterhalb des Präparates bzw. der zu beschreibenden Faser angeordnet und/oder angebracht ist bzw. sind. Der Begriff "modifiziert" bedeutet, dass ein Schreib- bzw. Laserstrahl in das Mikroskop eingekoppelt wird.

Durch die Nutzung eines inversen, modifizierten Mikroskops, wie es auch beim kommerziellen Zwei-Photonen Lithografie-Systems der Nanoscribe GmbH der Fall ist, lassen sich das zu beschreibende Element und das herzustellende Objekt, insbesondere mittels einer Piezo- und/oder mechanischen Verschiebeeinheit, nanometergenau zueinander ausrichten.

In einer weiteren bevorzugten Ausführungsform umfasst das Ausbilden der zumindest einen Mikrostruktur ein bereichsweises Polymerisieren des Fotolacks mittels einer dreidimensionalen, insbesondere Multiphotonen, Laserlithografie. Das bereichsweise Polymerisieren des Fotolacks erfolgt vorzugsweise durch ein Variieren bzw. Ändern bzw. Bewegen eines Laserfokus, insbesondere mittels eines Galvo-Scankopfes.

Der Galvo-Scankopf umfasst einen oder mehrere bewegliche Spiegel und sorgt dafür, dass der Laser über das Schreibfeld gescannt bzw. gerastert wird. Dabei wird der Laserstrahl durch die Bewegung der Spiegel abgelenkt. Durch die Verwendung eines Galvo-Scankopfes, wie er z.B. auch im Nanoscribe Professional GT zum Einsatz kommt, wird für jede Lage nicht das Objekt, sondern der schreibende Laserfokus bewegt. Dadurch lassen sich kürzere Herstellungsdauern und Vorteile in der Herstellungsgenauigkeit im Gegensatz zur Herstellung durch Bewegen des zu beschreibenden Elements mittels eines mechanischen oder PiezoVerschiebetisches erreichen.

In einer weiteren bevorzugten Ausführungsform umfasst das Ausbilden der zumindest einen Mikrostruktur ferner ein Entfernen von restlichem, d.h. nicht belichteten bzw. polymerisierten, Fotolack, insbesondere mit Hilfe eines Lösungsmittels.

Ein nicht beanspruchtes Beispiel, welches zum Verständnis der vorliegenden Erfindung hilfreich ist, betrifft eine Vorrichtung zur Herstellung zumindest einer Mikrostruktur auf einem axialen Ende einer optischen Faser, umfassend
- eine Halterung zum Anordnen und Halten bzw. Fixieren bzw. Aufnehmen der optischen Faser;
- einen 3D-Drucker zum Belichten eines an einem axialen Ende der optischen Faser aufgebrachten Fotolacks; und
- eine Ausrichtungseinheit zum gegenseitigen Ausrichten der in der Halterung angeordneten optischen Faser bzw. eines mit einem Fotolack benetzten axialen Endes der optischen Faser und eines Schreibstrahls des 3D-Druckers.

Die Ausrichtungseinheit kann eine Lichtquelle, z.B. eine Leuchtdiode oder einen Laser, zum Einkoppeln von Licht in ein zweites axiales Ende der optischen Faser umfassen.

Alternativ oder zusätzlich kann die Ausrichtungseinheit eine Verschiebeeinheit, insbesondere eine Piezo- und/oder mechanische Verschiebeeinheit, zum, insbesondere submikrometergenauen, Verschieben der in der Halterung angeordneten optischen Faser umfassen.

Alternativ oder zusätzlich kann die Ausrichtungseinheit eine Justierkamera zum Ermitteln und/oder Überprüfen der gegenseitigen Ausrichtung der in der Halterung angeordneten optischen Faser und des Schreibstrahls des 3D-Druckers umfassen.

Alternativ oder zusätzlich kann die Ausrichtungseinheit eine Faserranderkennungseinrichtung zum Erkennen eines Faserrandes umfassen. Die Faserranderkennungseinrichtung umfasst vorzugsweise eine Faserrand-Beleuchtungseinrichtung, mit der das erste axiale Ende der Faser beleuchtet werden kann. Zudem umfasst die Faserranderkennungseinrichtung vorzugsweise eine Faserranderkennungskamera zur Aufnahme eines oder mehrerer Bilder des gegebenenfalls beleuchteten ersten axialen Endes der Faser. Die Faserranderkennungskamera kann z.B. die oben erwähnte Justierkamera und/oder eine zusätzliche Kamera sein. Der Faserrand kann mit Hilfe des von der Faserranderkennungskamera aufgenommenen Bildes manuell erkannt werden. Vorzugsweise umfasst die Faserranderkennungseinrichtung jedoch einen Mikroprozessor bzw. einen Computer, der mit Hilfe eines Bilderkennungsalgorithmus den Rand der Faser auf Basis des zumindest einen von der Faserranderkennungskamera aufgenommenen Bildes automatisch erkennen kann.

Insbesondere kann der 3D-Drucker ein inverses modifiziertes Mikroskop umfassen.

Für das oben genannte nicht beanspruchte Beispiel gelten auch die vor- oder nachstehend gemachten Ausführungen zu den Ausführungsformen des ersten Aspekts.

Im Folgenden werden einzelne Ausführungsformen zur Lösung der Aufgabe anhand der Figuren beispielhaft beschrieben. Dabei weisen die einzelnen beschriebenen Ausführungsformen zum Teil Merkmale auf, die nicht zwingend erforderlich sind, um den beanspruchten Gegenstand auszuführen, die aber in bestimmten Anwendungsfällen gewünschte Eigenschaften bereit stellen. So sollen auch Ausführungsformen als unter die beschriebene technische Lehre fallend offenbart angesehen werden, die nicht alle Merkmale der im Folgenden beschriebenen Ausführungsformen aufweisen. Ferner werden, um unnötige Wiederholungen zu vermeiden, bestimmte Merkmale nur in Bezug auf einzelne der im Folgenden beschriebenen Ausführungsformen erwähnt. Es wird darauf hingewiesen, dass die einzelnen Ausführungsformen daher nicht nur für sich genommen sondern auch in einer Zusammenschau betrachtet werden sollen. Anhand dieser Zusammenschau wird der Fachmann erkennen, dass einzelne Ausführungsformen auch durch Einbeziehung von einzelnen oder mehreren Merkmalen anderer Ausführungsformen modifiziert werden können. Es wird darauf hingewiesen, dass eine systematische Kombination der einzelnen Ausführungsformen mit einzelnen oder mehreren Merkmalen, die in Bezug auf andere Ausführungsformen beschrieben werden, wünschenswert und sinnvoll sein kann, und daher in Erwägung gezogen und auch als von der Beschreibung umfasst angesehen werden soll.

### Kurze Beschreibung der Zeichnungen

- Figur 1: zeigt ein schematisches Ablaufdiagramm des erfindungsgemäßen Verfahrens;
- Figur 2: zeigt eine schematische Skizze des direkten Schreibvorgangs einer Mikrostruktur auf einer optischen Faser gemäß einer bevorzugten Ausführungsform des erfindungsgemäßen Verfahrens;

- Figur 3: zeigt schematische Skizzen von beispielhaften Mikrostrukturen, welche mittels des erfindungsgemäßen Verfahrens auf einer optischen Faser hergestellt werden können.

### Detaillierte Beschreibung der Zeichnungen

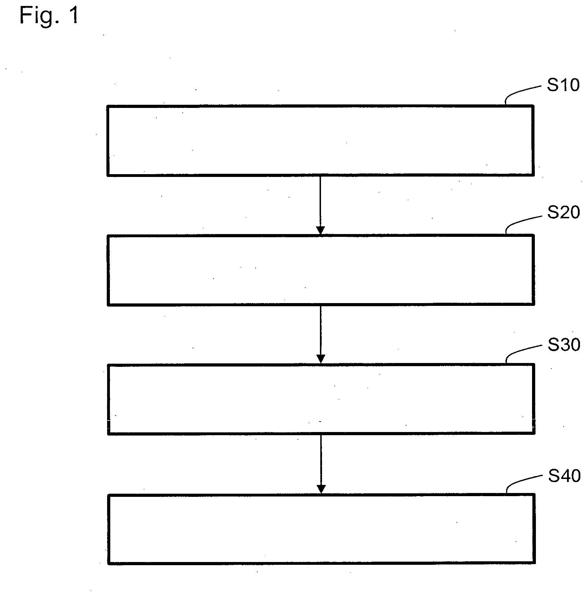

Die **Figur 1** zeigt ein schematisches Ablaufdiagramm des erfindungsgemäßen Verfahrens. In einem ersten Schritt S10 wird eine optische Faser bereitgestellt. In einem zweiten Schritt S20 wird ein erstes axiales Ende der optischen Faser belackt, d.h. mit einer fotosensitiven Substanz bzw. mit Fotolack benetzt. In einem dritten Schritt S30 werden die optische Faser und ein Schreib- bzw. Laserstrahl eines 3D-Druckers gegenseitig ausgerichtet. In einem vierten Schritt S40 wird die Mikrostruktur durch Belichten des Fotolacks mit Hilfe eines 3D-Druckers ausgebildet.

Der 3D-Drucker basiert vorzugsweise auf einer dreidimensionalen Multiphoton-Laserlithografie. Insbesondere kann der 3D-Drucker ein 3D Femtosekunden Laser-Lithografiesystem, beispielsweise ein "Photonic Professional GT^{™}" der Nanoscribe GmbH sein. Die Technologie zur Herstellung dreidimensionaler Mikro- und Nanostrukturen in fotosensitiven Materialien basiert auf dem direkten Laserschreiben, d.h. einem nichtlinearen Zwei-Photonen-Absorptionsprozess. Viele Fotolacke die unter Einfluss von UV-Licht aushärten zeigen eine ähnliche chemische Reaktion, wenn zwei Photonen aus dem nahinfraroten Lichtspektrum simultan absorbiert werden. Für das Auftreten dieses Effekts ist eine ausreichend hohe Lichtintensität nötig, die durch Ultrakurzpulslaser bereitgestellt werden kann. Das Laserlicht wird in den Fotolack fokussiert und die Zwei-Photonen-Polymerisation ist lokal auf den Bereich des Fokusvolumens beschränkt.

Die dreidimensionale Multiphoton-Laserlithografie wird erfindungsgemäß genutzt, um direkt auf optische Fasern optische Mikroelemente herzustellen. Dabei werden die Bauteile Schicht für Schicht mittels Härtung eines Fotolacks durch Zweiphotonenabsorption direkt auf dem Trägerwerkstoff aufgebaut. Dadurch ist es möglich jedes beliebige Optikdesign zu realisieren. Mit Hilfe von zusätzlich mit dem 3D-Drucker gedruckten bzw. geschriebenen Haltestrukturen, welche in das Design bzw. Layout integriert sind, ist es somit auch möglich, komplexe Strukturen, beispielsweise Strukturen mit Hohlräumen, herzustellen. Die Haltestrukturen können dabei zum Halten bestimmter Strukturen bzw. Optiken dienen. Der nicht gehärtete Fotolack kann nach dem Belichten mit einem Lösungsmittel herausgespült werden. Die Formabweichung ist dabei kleiner oder gleich 1 µm.

Insbesondere kann der Schritt S30 ein Beleuchten des von dem 3D-Drucker abgewandten Endes bzw. der von dem 3D-Drucker abgewandten Seite der Faser mit einer Diode und ein anschließendes Ausrichten der optischen Faser und des Schreibstrahls anhand des hell leuchtenden Faserkerns auf der dem 3D-Drucker zugewandten Seite der Faser umfassen. Dazu muss die dem 3D-Drucker zugewandte Seite der Faser nicht beleuchtet werden. Das Ausrichten der optischen Faser und des Schreibstrahls kann z.B. manuell durch Verschieben der Faser mit Hilfe eines Piezoverschiebetisches oder eines mechanischen Verschiebetisches erfolgen.

Alternativ oder zusätzlich kann der Schritt S30 ein Ausrichten mittels Erkennung der Faserendfläche bzw. der Faserumrandung, insbesondere mit einem Bilderkennungsalgorithmus oder manuell, umfassen. Dazu muss die von dem 3D-Drucker abgewandte Seite der Faser nicht beleuchtet werden, sondern es ist ausreichend wenn die dem 3D-Drucker zugewandte Seite der Faser beleuchtet wird und mittels einer Kamera beobachtet wird. Die Faserendfläche bzw. der Faserrand kann mittels der Kamera aufgenommen werden und anschließend kann der Koordinaten-Nullpunkt des 3D-Druckers entweder durch einen automatischen Bilderkennungsalgorithmus oder manuell festgelegt werden.

Durch dieses Verfahren kann die Mikrooptik submikrometergenau auf einem axialen Ende bzw. dem Kern der Faser positioniert werden. Wird nur der Faserrand erkannt ohne dass der Kern von dem zweiten axialen Ende der Faser beleuchtet wird, so kann der Kern zentral in der Mitte angenommen werden, was jedoch im Falle von Fabrikationsungenauigkeiten der Faser zu Fehlern führen kann.

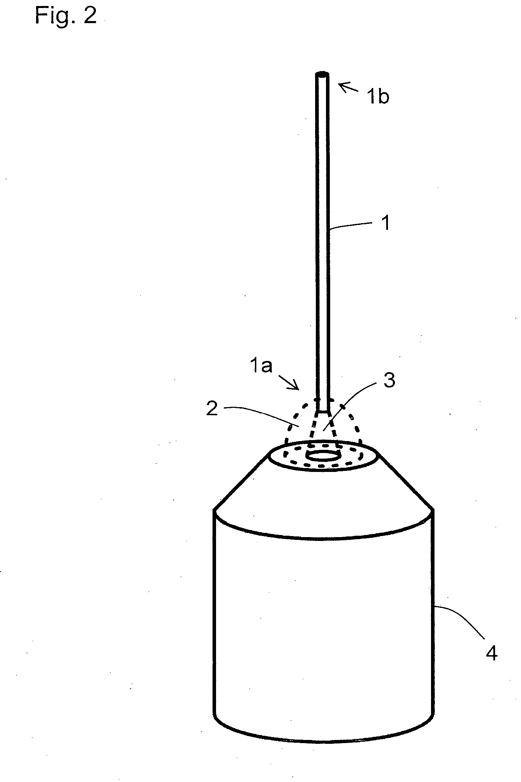

Die **Figur 2** zeigt eine schematische Skizze des direkten Schreibvorgangs einer Mikrostruktur auf einer optischen Faser 1 gemäß einer bevorzugten Ausführungsform des erfindungsgemäßen Verfahrens.

Dazu ist aus Gründen der Einfachheit in der **Figur 2** lediglich ein Objektiv 4 des 3D-Druckers gezeigt, mit welchem ein Schreib- bzw. Laserstrahl auf eine vorbestimmte Position fokussiert werden kann. Die optische Faser 1 weist zwei axiale Enden bzw. Endabschnitte auf, nämlich ein erstes Ende 1a, auf welches die Mikrostruktur geschrieben bzw. hergestellt werden soll und welches während des Schreibvorgangs dem 3D-Drucker bzw. dem Objektiv 4 des 3D-Druckers zugewandt ist. Das erste Ende 1a der optischen Faser ist somit das zu bearbeitende Ende der Faser. Vor dem Schreibprozess wird das erste axiale Ende 1a der optischen Faser mit Fotolack 2 benetzt, indem es in ein Fotolackreservoir eingetaucht wird. Ein zweites Ende 1b ist während des Schreibvorgangs dem 3D-Drucker bzw. dem Objektiv 4 des 3D-Druckers abgewandt. In das zweite Ende 1b wird insbesondere zur gegenseitigen submikrometergenauen Ausrichtung der Faser und des Schreibstrahls des 3D-Druckers Licht mit Hilfe einer Leuchtdiode (LED) eingekoppelt.

Zum Belichten des Fotolacks 2 bzw. zum Schreiben der Mikrostruktur wird die mit Fotolack 2 benetzte Faser 1 in eine Halterung eingespannt und oberhalb eines Mikroskops bzw. Schreibkopfs des 3D-Druckers platziert. Mittels einer Leuchtdiode (in der **Figur 2** nicht gezeigt), deren Strahl von der Rückseite, d.h. über das zweite axiale Ende 1b, in die optische Faser 1 eingekoppelt wird, erfolgt eine genaue gegenseitige Ausrichtung der Faser 1 und des Schreibstrahls. Durch eine Projektion der Faserendfläche auf eine Justierkamera (in der **Figur 2** nicht gezeigt) kann der Koordinaten-Nullpunkt submikrometergenau in den Faserkernmittelpunkt gelegt werden. Nach abgeschlossenem Schreibprozess wird der restliche Fotolack 2, welcher nicht polymerisiert wurde, durch ein Lösungsmittel von dem beschriebenen Faserende 1a entfernt.

Das Verfahren kann z.B. die folgenden Schritte umfassen:
i) Eintauchen des axialen Endes der optischen Faser in den Fotolack oder das Fotolackreservoir;
ii) Benetzen der Faser mit Fotolack, um Lufteinschlüsse und Fotolackflüsse zu vermeiden, indem unter anderem
   a) die Faser durch den Fotolack bewegt,
   b) ein Ultraschallbad verwendet und/oder
   c) gewartet wird,
   bis der Fotolack die Faserendfläche homogen umgibt;
iii) Gegenseitiges Ausrichten der Festkernfaser und des Schreibstrahls des Lithografiesystems, um den Koordinaten-Nullpunkt submikrometergenau in den Mittelpunkt des Faserkerns zu legen;
   Dabei kann die gegenseitige Ausrichtung durch
   a) Beleuchtung der gegenüberliegenden Faserendfläche, so dass Licht den Faserkern auf der zu bearbeitenden Faserendfläche sichtbar macht und somit eine Ausrichtung von Faserkern und Schreibstrahl mittels Justierkamera ermöglicht wird,
      und/oder
   b) Erkennung der Faserumrandung und Legen des Koordinaten-Nullpunkts in den Fasermittelpunkt
      erfolgen. Beides, d.h. der oben genannte Schritt a) und/oder b), kann durch Unterstützung von Bilderkennungssoftware durchgeführt werden.
iv) Durchführen des 3D-Druckvorgangs bzw. 3D-Schreibprozesses, insbesondere bereichsweises Polymerisieren des Fotolacks auf Basis eines vorgegebenen Layouts bzw. Designs;
v) Entfernen des restlichen Fotolacks, das heißt des Fotolacks, welcher nicht polymerisiert wurde, mit Hilfe eines Lösungsmittels vom Faserende.

Insbesondere kann das Verfahren einen oder mehrere der folgenden Schritte umfassen:
- Präparieren bzw. Belacken des axialen Endes der Festkernfaser mit einem Fotolack;
- Einspannen der Festkernfaser in eine Halterung;
- Gegenseitiges Ausrichten der Festkernfaser und des Schreibstrahls des 3D-Druckers mittels einer Leuchtdiode;
- Projizieren einer Festkernfaserendfläche auf eine Justierkamera, wodurch der Koordinaten-Nullpunkt, insbesondere mikrometergenau, in den Mittelpunkt bzw. Kernmittelpunkt der Festkernfaser gelegt werden kann;
- Durchführen des 3D-Druckvorgangs bzw. 3D-Schreibprozesses, insbesondere bereichsweises Polymerisieren des Fotolacks auf Basis eines vorgegebenen Layouts bzw. Designs;
- Entfernen von restlichem Fotolack, d.h. von Fotolack, welcher nicht polymerisiert wurde, mit Hilfe eines Lösungsmittels vom Festkernfaserende.

Das Belacken bzw. Benetzen des axialen Endes der Festkernfaser mit Fotolack erfolgt erfindungsgemäß durch ein Belacken eines Mikroskopobjektivs des 3D-Druckers mit Fotolack und ein Eintauchen des zu bearbeitenden axialen Endes der optischen Faser in den auf das Mikroskopobjektiv aufgebrachten Fotolack, vorzugsweise mittels manueller Fokusfindung. Mit anderen Worten wird ein Fotolackreservoir direkt auf dem Objektiv des 3D-Druckers bereitgestellt. Um Luftblasen zu vermeiden, wird die Faser im Lack vorzugsweise bewegt.

Das erfindungsgemäße Verfahren erweitert die sogenannte dip-in Multiphoton-Laserlithografie, bei der der Trägerwerkstoff, in diesem Fall eine optische Faser direkt in einen Fotolack getaucht wird, um Strukturen mit Auflösungen unter einem Mikrometer direkt auf der optischen Faser herzustellen. Durch die Nutzung der dip-in Lithografie ist keine Belackung per Spray- oder Spin-Coating nötig. Da die Faserendflächen keine ausgedehnten Flächen sind, wären mit den genannten Methoden, aufgrund der kleinen Fläche, nur inhomogene und schwer quantifizierbare Ergebnisse erreichbar. Insbesondere kommt dabei ein dip-in Lithografie-Fotolack alleine oder in Kombination mit anderen Fotolacken zum Einsatz. Der besondere Vorteil ist, dass lösungsmittelfreie ultraviolett empfindliche Fotolacke verwendet werden, die die Verklebung des Objektivs des 3D-Druckers nicht angreifen oder anlösen. Da die verwendeten Fotolacke lösungsmittelfrei sind, benötigen sie des Weiteren keine Backvorgänge, wie sie in der Lithografie normalerweise üblich sind, was bei den oben erwähnten Bauteilen aufgrund der kleinen Baugröße ebenso zu Schwierigkeiten führen würde, da kontrolliertes Ausgasen der Lösungsmittel für homogene Materialeigenschaften nur sehr schwer kontrollierbar wäre.

Durch Nutzung eines inversen, modifizierten Mikroskops, wie es auch beim kommerziellen Zwei-Photonen Lithografie-Systems der Nanoscribe GmbH der Fall ist, lassen sich das zu beschreibende Element und das herzustellende Objekt mittels einer Piezo- und/oder mechanischen Verschiebeeinheit nanometergenau zueinander ausrichten. Durch die Verwendung eines Galvo-Scankopf, wie er auch im Nanoscribe Professional GT zum Einsatz kommt, wird für jede Lage nicht das Objekt, sondern der schreibende Laserfokus 3 bewegt. Dadurch lassen sich kürzere Herstellungsdauern und Vorteile in der Herstellungsgenauigkeit im Gegensatz zur Herstellung durch Bewegen des zu beschreibenden Elements mittels eines Piezoverschiebetisches erreichen.

Wie in der **Figur 2** dargestellt, taucht das erste axiale Ende 1a der optischen Faser 1 für den Schreibprozess in den auf das Objektiv 4 aufgebrachten Fotolack 2 ein. Die fotoresistive Substanz bzw. der Fotolack 2 wird somit vorteilhafterweise auch als Immersionsmittel verwendet. Auf diese Weise lassen sich bei zunehmender Schreibtiefe zusätzliche Aberrationen reduzieren oder vermeiden und damit die Schreibgenauigkeit, insbesondere bei der Herstellung von höheren Strukturen, z.B. Strukturen mit einer Höhe von > 10 µm, verbessern.

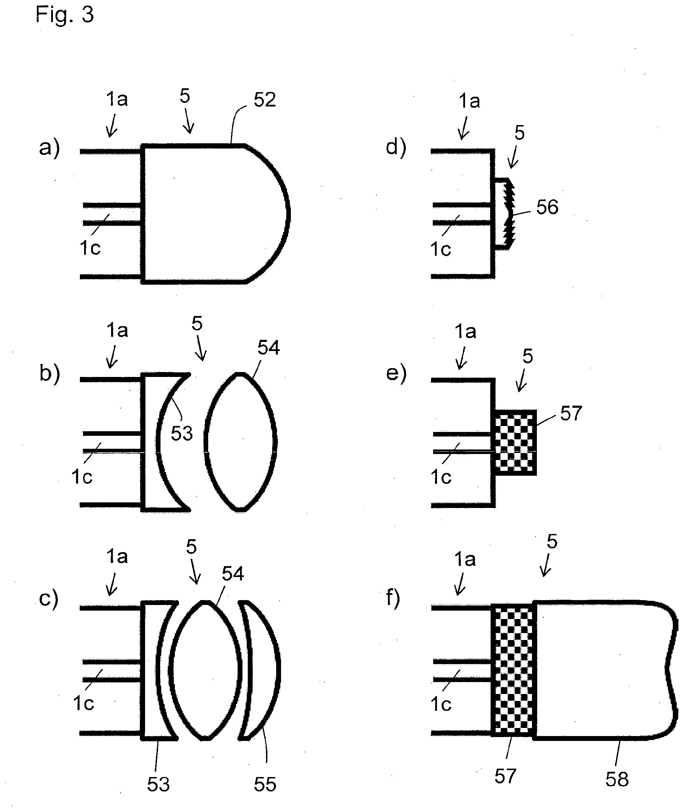

In der **Figur 3** sind beispielhafte Mikrostrukturen 5, welche mittels des erfindungsgemäßen Verfahrens bzw. der erfindungsgemäßen Vorrichtung auf einer optischen Faser 1 bzw. dessen ersten axialen Ende 1a hergestellt werden können, schematisch dargestellt. Die Mikrostrukturen 5 sind jeweils sehr genau, insbesondere submikrometergenau, relativ zu dem axialen Ende 1a der optischen Faser bzw. dem Faserkern 1c ausgerichtet. Dies resultiert aus der mit der vorliegenden Erfindung möglichen hochpräzisen Ausrichtung des axialen Endes 1a bzw. des Faserkerns 1c der optischen Faser und des Schreib- bzw. Laserstrahls des 3D-Druckers.

Im Bild a) der **Figur 3** ist die Mikrostruktur 5 als ein Einlinser bzw. eine plankovexe Linse 52 ausgebildet und stellt somit eine Kollimationsoptik dar. Im Bild b) der **Figur** 3 umfasst die Mikrostruktur 5 eine plankonkave Linse 53 und eine bikonvexe Linse 54, welche zusammen einen Zweilinser bilden. Im Bild c) der **Figur 3** umfasst die Mikrostruktur 5 eine plankonkave Linse 53, eine bikonvexe Linse 54 und einen konkav-konvexen Meniskus 55, welche zusammen einen Dreilinser bilden. Im Bild d) der **Figur 3** bildet die Mikrostruktur 5 eine diffraktive Optik 56. Im Bild e) der **Figur 3** ist die Mikrostruktur 5 als photonischer Kristall 57 ausgebildet. Und im Bild f) der **Figur 3** ist die Mikrostruktur eine Kombination aus einem photonischen Kristall 57 und einer Freiformoptik 58.

Es versteht sich, dass die **Figur 3** nur einige Beispiele von Mikrostrukturen auf optischen Fasern zeigt und dass mit dem erfindungsgemäßen Verfahren bzw. der erfindungsgemäßen Vorrichtung beliebig andere Mikrostrukturen bzw. Mikrooptiken hergestellt werden können.

### Bezugszeichenliste

- 1: Optische Faser / Glasfaser
- 1a: Erstes axiales Ende bzw. erster Endabschnitt der optischen Faser
- 1b: Zweites axiales Ende bzw. zweiter Endabschnitt der optischen Faser
- 1c: Faserkern
- 2: Fotosensitive Substanz / Fotolack
- 3: Laserfokus
- 4: Objektiv
- 5: Mikrostruktur / Mikrooptik
- 52: Plankovexe Linse
- 53: Plankonkave Linse
- 54: Bikonvexe Linse
- 55: Konkav-konvexer Meniskus
- 56: Diffraktive Optik
- 57: Photonischer Kristall
- 58: Freiformoptik
- S10: Bereitstellen der optischen Faser
- S20: Benetzen des axialen Endes der optischen Faser mit Fotolack
- S30: Gegenseitiges Ausrichten der optischen Faser und eines Schreibstrahls eines 3D-Druckers
- S40: Ausbilden zumindest einer Mikrostruktur durch Belichten des Fotolacks mit Hilfe des 3D-Druckers

## Patentansprüche

1. Verfahren zur Herstellung zumindest einer Mikrostruktur (5) auf einem axialen Ende (1a) einer optischen Faser (1), umfassend die Schritte:
- Bereitstellen (S10) der optischen Faser (1);
- Benetzen (S20) des axialen Endes (1a) der optischen Faser (1) mit Fotolack (2);
- Gegenseitiges Ausrichten (S30) der optischen Faser (1) und eines Schreibstrahls eines 3D-Druckers;
- Ausbilden (S40) der zumindest einen Mikrostruktur (5) durch Belichten des Fotolacks (2) mit Hilfe des 3D-Druckers;
**dadurch gekennzeichnet, dass**
das Benetzen des axialen Endes (1a) der optischen Faser (1) mit Fotolack ein Belacken eines Objektivs (4) des 3D-Druckers mit Fotolack (2) und ein Eintauchen des axialen Endes (1a) der optischen Faser (1) in den auf das Objektiv (4) aufgebrachten Fotolack (2) umfasst.

2. Verfahren nach Anspruch 1, wobei das gegenseitige Ausrichten (S30) der optischen Faser (1) und des Schreibstrahls des 3D-Druckers submikrometergenau erfolgt.

3. Verfahren nach einem der vorangehenden Ansprüche,
wobei das gegenseitige Ausrichten (S30) der optischen Faser (1) und des Schreibstrahls des 3D-Druckers mittels einer Leuchtdiode erfolgt, und/oder
wobei das gegenseitige Ausrichten (S30) der optischen Faser (1) und des Schreibstrahls des 3D-Druckers ein Einkoppeln von Licht in ein zweites axiales Ende (1b) der optischen Faser (1) umfasst.

4. Verfahren nach einem der vorangehenden Ansprüche,
wobei das gegenseitige Ausrichten (S30) der optischen Faser (1) und des Schreibstrahls des 3D-Druckers ein Erkennen eines Randes der optischen Faser (1) umfasst, und/oder
wobei das gegenseitige Ausrichten (S30) der optischen Faser (1) und des Schreibstrahls des 3D-Druckers ferner ein Ermitteln der Position eines radialen Mittelpunktes der optischen Faser (1) und ein Definieren der ermittelten Position als Koordinaten-Nullpunkt eines Koordinatensystems des 3D-Druckers umfasst.

5. Verfahren nach einem der vorangehenden Ansprüche,
wobei das gegenseitige Ausrichten (S30) der optischen Faser (1) und des Schreibstrahls des 3D-Druckers unter Verwendung einer Justierkamera durchgeführt wird, und/oder
wobei das gegenseitige Ausrichten (S30) der optischen Faser (1) und des Schreibstrahls des 3D-Druckers unter Verwendung eines Bilderkennungs-Algorithmus durchgeführt wird.

6. Verfahren nach einem der vorangehenden Ansprüche, wobei das Benetzen (S20) des axialen Endes (1a) der optischen Faser (1) ein Bewegen des axialen Endes (1a) der optischen Faser (1) in dem Fotolack (2) und/oder ein Behandeln mit Ultraschall umfasst.

7. Verfahren nach einem der vorangehenden Ansprüche, wobei das Ausbilden (S40) der zumindest einen Mikrostruktur (5) ein bereichsweises Polymerisieren des Fotolacks (2) mittels einer dreidimensionalen Laserlithografie umfasst und wobei das bereichsweise Polymerisieren des Fotolacks (2) vorzugsweise durch ein Variieren eines Laserfokus (3) erfolgt.

8. Verfahren nach einem der vorangehenden Ansprüche, wobei das Ausbilden (S40) der zumindest einen Mikrostruktur (5) ferner ein Entfernen von restlichem Fotolack umfasst.

## Claims

1. A method for producing at least one microstructure (5) on an axial end (1a) of an optical fiber (1), comprising the steps of:
- providing (S10) the optical fiber (1);
- wetting (S20) the axial end (1a) of the optical fiber (1) with photoresist (2);
- mutually aligning (S30) the optical fiber (1) and a writing beam of a 3D printer;
- forming (S40) the at least one microstructure (5) by exposing the photoresist (2) using the 3D printer;
**characterized in that** wetting the axial end (1a) of the optical fiber (1) with photoresist comprises coating a lens (4) of the 3D printer with photoresist (2) and immersing the axial end (1a) of the optical fiber (1) in the photoresist (2) applied to the lens (4).

2. The method according to claim 1, wherein the mutually alignment (S30) of the optical fiber (1) and the writing beam of the 3D printer takes place with submicron accuracy.

3. The method according to one of the preceding claims,
wherein the mutually alignment (S30) of the optical fiber (1) and the writing beam of the 3D printer takes place by means of a light-emitting diode, and/or
wherein the mutually alignment (S30) of the optical fiber (1) and the writing beam of the 3D printer comprises coupling light into a second axial end (1b) of the optical fiber (1).

4. The method according to one of the preceding claims,
wherein the mutually alignment (S30) of the optical fiber (1) and the writing beam of the 3D printer comprises detecting an edge of the optical fiber (1),
and/or
wherein the mutually alignment (S30) of the optical fiber (1) and the writing beam of the 3D printer further comprises determining the position of a radial center of the optical fiber (1) and defining the determined position as a coordinate zero point of a coordinate system of the 3D printer.

5. The method according to one of the preceding claims,
wherein the mutually alignment (S30) of the optical fiber (1) and the writing beam of the 3D printer is carried out using an alignment camera, and/or
wherein the mutually alignment (S30) of the optical fiber (1) and the writing beam of the 3D printer is carried out using an image recognition algorithm.

6. The method according to one of the preceding claims, wherein wetting (S20) the axial end (1a) of the optical fiber (1) comprises moving the axial end (1a) of the optical fiber (1) in the photoresist (2) and/or treatment with ultrasound.

7. The method according to one of the preceding claims, wherein forming (S40) the at least one microstructure (5) comprises area-by-area polymerization of the photoresist (2) by means of three-dimensional laser lithography, and wherein the area-by-area polymerization of the photoresist (2) takes place preferably by a variation of a laser focus (3).

8. The method according to one of the preceding claims, wherein forming (S40) the at least one microstructure (5) further comprises removing residual photoresist.

## Revendications

1. Un procédé de fabrication d'au moins une microstructure (5) sur une extrémité axiale (1a) d'une fibre optique (1), comprenant les étapes consistant à :
- fournir (S10) la fibre optique (1) ;
- mouiller (S20) l'extrémité axiale (1a) de la fibre optique (1) avec de la laque photosensible (2) ;
- aligner mutuellement (S30) la fibre optique (1) et un faisceau d'écriture d'une imprimante 3D ;
- former (S40) la au moins une microstructure (5) par exposition de la laque photosensible (2) à l'aide de l'imprimante 3D ;
**caractérisé en ce que**
le mouillage de l'extrémité axiale (1a) de la fibre optique (1) avec de la laque photosensible comprend un revêtement ou encore une enduction (*Belacken*) d'un objectif (4) de l'imprimante 3D avec de la laque photosensible (2) et une immersion de l'extrémité axiale (1a) de la fibre optique (1) dans la laque photosensible (2) appliquée sur l'objectif (4).

2. Le procédé d'après la revendication 1, sachant que l'alignement mutuel (S30) de la fibre optique (1) et du faisceau d'écriture de l'imprimante 3D est réalisé avec une précision submicrométrique.

3. Le procédé d'après l'une quelconque des revendications précédentes,
sachant que l'alignement mutuel (S30) de la fibre optique (1) et du faisceau d'écriture de l'imprimante 3D est réalisé au moyen d'une diode électroluminescente, et/ou
sachant que l'alignement mutuel (S30) de la fibre optique (1) et du faisceau d'écriture de l'imprimante 3D comprend une injection de lumière dans une deuxième extrémité axiale (1b) de la fibre optique (1).

4. Le procédé d'après l'une quelconque des revendications précédentes,
sachant que l'alignement mutuel (S30) de la fibre optique (1) et du faisceau d'écriture de l'imprimante 3D comprend une reconnaissance d'un bord de la fibre optique (1), et/ou
sachant que l'alignement mutuel (S30) de la fibre optique (1) et du faisceau d'écriture de l'imprimante 3D comprend en outre une détermination de la position d'un centre radial de la fibre optique (1) et une définition de la position déterminée comme point zéro de coordonnées d'un système de coordonnées de l'imprimante 3D.

5. Le procédé d'après l'une quelconque des revendications précédentes,
sachant que l'alignement mutuel (S30) de la fibre optique (1) et du faisceau d'écriture de l'imprimante 3D est effectué en utilisant une caméra d'ajustage, et/ou
sachant que l'alignement mutuel (S30) de la fibre optique (1) et du faisceau d'écriture de l'imprimante 3D est réalisé en utilisant un algorithme de reconnaissance d'image.

6. Le procédé d'après l'une quelconque des revendications précédentes, sachant que le mouillage (S20) de l'extrémité axiale (1a) de la fibre optique (1) comprend un déplacement de l'extrémité axiale (1a) de la fibre optique (1) dans la laque photosensible (2) et/ou un traitement par ultrasons.

7. Le procédé d'après l'une quelconque des revendications précédentes, sachant que la formation (S40) de la au moins une microstructure (5) comprend une polymérisation par zones de la laque photosensible (2) au moyen d'une lithographie laser tridimensionnelle, et sachant que la polymérisation par zones de la laque photosensible (2) est de préférence réalisée en faisant varier une mise au point laser (3).

8. Le procédé d'après l'une quelconque des revendications précédentes, sachant que la formation (S40) de la au moins une microstructure (5) comprend en outre une élimination de laque photosensible résiduelle.
